(19) Europäisches Patentamt
European Patent Office
Office européen des brevets

(11) EP 3 281 772 A1

(12) EUROPEAN PATENT APPLICATION

(43) Date of publication:
14.02.2018 Bulletin 2018/07

(51) Int Cl.:
B29C 64/40 (2017.01)    B29C 64/106 (2017.01)
B29C 64/171 (2017.01)    B29C 64/182 (2017.01)

(21) Application number: 17185615.6

(22) Date of filing: 09.08.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 10.08.2016 US 201615232972

(71) Applicant: Xerox Corporation
Rochester, NY 14644 (US)

(72) Inventors:
• HOOVER, Linn C.
Webster, NY, 14580 (US)
• RUIZ, Erwin
Rochester, NY, 14608 (US)
• DUFORT, Ron E.
Rochester, NY, 14623 (US)
• KANUNGO, Mandakini
Penfield, NY 14526 (US)
• BADESHA, Santokh S.
Pittsford, NY 14534 (US)

(74) Representative: Lord, Michael et al
Gill Jennings & Every LLP
The Broadgate Tower
20 Primrose Street
GB-London EC2A 2ES (GB)

(54) FORMATION AND SEPARATION OF 3D PRINTED PARTS WITHIN MULTI-PART BUILD STRUCTURES

(57) Methods and systems related to the three-dimensional (3D) printing of build structures including a plurality of 3D objects embedded within a support matrix are provided.

FIG. 2B

EP 3 281 772 A1

**Description**

**BACKGROUND**

Digital three-dimensional ("3D") object manufacturing, also conventionally known as digital additive manufacturing, is a process for making three-dimensional objects of virtually any shape from a digital model. In one such conventional process, a predetermined digital model of a specific three-dimensional object and a supply of desired "build" materials, either commercially available or manufactured under contract, are used to form the predetermined three-dimensional object incrementally, often in a layer-by-layer fashion, by adding materials in specific sequence as well as to specific areas, regions or locations in order to form predetermined successive layers of the materials in a shape consistent with the predetermined digital model. The layers can be formed in various ways, e.g., by extruding or ejecting the material through an extruder or print head onto a substrate, such as a base layer, or a previously formed layer. Various materials may be used, including thermoplastic materials, radiation-curable materials, and the like. (See, e.g., Principles of Polymerization by George Odian, 2nd ed., published by John Wiley & Sons, Inc., copyright 1981, incorporated herein in its entirety.) Either the substrate or base layer onto which the subsequent layers are formed, or the material deposition devices employed, or combinations thereof are frequently moved independently, in up to three dimensions during layer formation in order to achieve desired 3D objects. In this way, digital three-dimensional object manufacturing is distinguishable from traditional object-forming techniques which are generally subtractive in nature, involving the removal of material from a work piece by various machining operations.

**SUMMARY**

The present disclosure provides methods and systems related to the three-dimensional (3D) printing of build structures including a plurality of 3D objects embedded within a support matrix.

In one aspect, a method for forming a plurality of three-dimensional (3D) objects is provided. In embodiments, the method comprises dispensing a first material toward a build plate via a 3D printing system to form a plurality of 3D objects, the plurality of 3D objects characterized by a first dielectric loss tangent (DLT) coefficient over a selected temperature range and a selected frequency range; dispensing a second material toward the build plate via the 3D printing system to form a support matrix surrounding the plurality of 3D objects such that the plurality of 3D objects is embedded within the support matrix, the support matrix characterized by a second DLT coefficient over the selected temperature range and the selected frequency range; and dispensing a third material toward the build plate via the 3D printing system to form one or more boundary regions embedded within the support matrix such that adjacent embedded 3D objects are separated by the one or more boundary regions, the one or more boundary regions characterized by a third DLT coefficient over the selected temperature range and the selected frequency range. The plurality of 3D objects, the support matrix and the one or more boundary regions provide a build structure corresponding to image data accessible by the 3D printing system. The third DLT coefficient is greater than both the second DLT coefficient and the first DLT coefficient over the selected temperature range and the selected frequency range.

In another aspect, a 3D printing system for forming a plurality of 3D objects is provided. In embodiments, the system comprises a 3D printer comprising a print head and a build plate and a controller operably coupled to the 3D printer, the controller comprising a processor and a non-transitory computer-readable medium operably coupled to the processor, the computer-readable medium comprising instructions that, when executed by the processor, perform operations which cause the 3D printing system to perform the following: dispense a first material toward a build plate to form a plurality of 3D objects, the plurality of 3D objects characterized by a first DLT coefficient over a selected temperature range and a selected frequency range; dispense a second material toward the build plate to form a support matrix surrounding the plurality of 3D objects such that the plurality of 3D objects is embedded within the support matrix, the support matrix characterized by a second DLT coefficient over the selected temperature range and the selected frequency range; and dispense a third material toward the build plate to form one or more boundary regions embedded within the support matrix such that adjacent embedded 3D objects are separated by the one or more boundary regions, the one or more boundary regions characterized by a third DLT coefficient over the selected temperature range and the selected frequency range. The plurality of 3D objects, the support matrix and the one or more boundary regions provide a build structure corresponding to image data accessible by the 3D printing system. The third DLT coefficient is greater than both the second DLT coefficient and the first DLT coefficient over the selected temperature range and the selected frequency range.

In another aspect, a 3D-printed build structure is provided. In embodiments, the 3D-printed build structure comprises a plurality of 3D objects, the plurality of 3D objects characterized by a first DLT coefficient over a selected temperature range and a selected frequency range, a support matrix surrounding the plurality of 3D objects such that the plurality of 3D objects is embedded within the support matrix, the support matrix characterized by a second DLT coefficient over the selected temperature range, and one or more boundary regions embedded within the support matrix such that adjacent embedded 3D objects are separated by the one or more boundary regions, the one or more boundary regions characterized by a third DLT coefficient over the selected temperature range and the selected frequency range. The third DLT coefficient is greater than both the second DLT coefficient and the first DLT coefficient over the selected temperature range and the selected frequency range.

These and other aspects will be discussed in greater detail below.

**BRIEF DESCRIPTION OF THE DRAWINGS**

Illustrative embodiments will hereafter be described with reference to the accompanying drawings.

FIG. 1 depicts an illustrative three-dimensional (3D) printing system which may be used to carry out the methods of the present disclosure.

FIG. 2A shows a perspective view of an illustrative build structure including a plurality of 3D objects embedded within a support matrix which may be formed using the methods of the present disclosure (for clarity, the boundary regions are not shown).

FIG. 2B shows a side, cross-sectional view of the build structure of FIG. 2A.

FIG. 3 shows an inner portion of the build structure of FIG. 2B.

FIG. 4 shows a plot of dielectric loss tangent (DLT) coefficient as a function of temperature for two different build materials, a support matrix material and a boundary region material.

FIG. 5 shows a plot of the half-power depth ($D_{halfpower}$) values as a function of temperature for two different build materials and a support matrix material.

**DETAILED DESCRIPTION**

The present disclosure provides methods and systems related to the three-dimensional (3D) printing of build structures including a plurality of 3D objects embedded within a support matrix. In embodiments, the build structure is configured to allow the embedded 3D objects to be quickly and efficiently separated from the build structure for subsequent application of a post-processing step to remove the support matrix. In embodiments, the separated embedded 3D objects can be post-processed individually, thereby enabling 3D objects requiring different post-processing steps to be combined into a single build structure which can be formed in a single production run or print job.

The terms "3D printing," "3D printer," and the like are used throughout the present disclosure to refer to the various digital additive manufacturing techniques by which successive layers of material(s) are formed under computer control to create a 3D object. Such digital additive manufacturing techniques include, but are not limited to, Fused Deposition Modeling (FDM®), PolyJet® techniques, and the like.

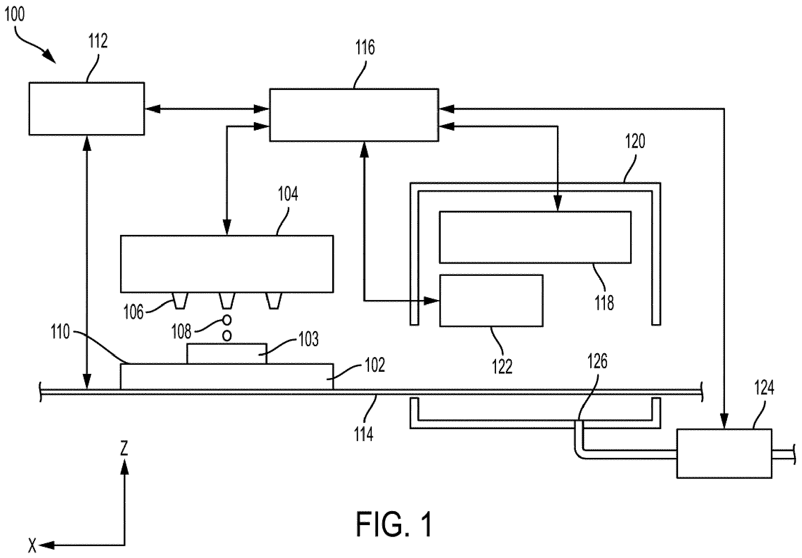

In one aspect, the present disclosure provides a method of forming a plurality of 3D objects. In embodiments, the method includes dispensing (e.g., ejecting, extruding, etc.) a first material toward a build plate via a 3D printing system to form a plurality of 3D objects, dispensing a second material toward the build plate via the 3D printing system to form a support matrix surrounding the plurality of 3D objects such that the plurality of 3D objects is embedded within the support matrix, and dispensing a third material toward the build plate via the 3D printing system to form one or more boundary regions embedded within the support matrix such that adjacent embedded 3D objects are separated by the one or more boundary regions. The plurality of 3D objects, the support matrix and the one or more boundary regions provide a build structure corresponding to image data accessible by the 3D printing system. The method may be carried out by a variety of 3D printing systems, e.g., the 3D printing system 100 shown in FIG. 1, which will be further described below.

As further described below, the terms "surrounding" and "embedded" and the like encompass embodiments in which one or more 3D objects and one or more boundary regions may be partially (as opposed to fully) surrounded, embedded, etc. Similarly, the term "separated" encompass embodiments in which embedded 3D objects are partially separated. The degree of surrounding, embedding, etc. is selected to sufficiently support, stabilize and protect the 3D objects during formation and subsequent separation from the build structure. Similarly, the degree of separation may be selected to sufficiently facilitate release of embedded 3D objects from the build structure during a subsequent separation step.

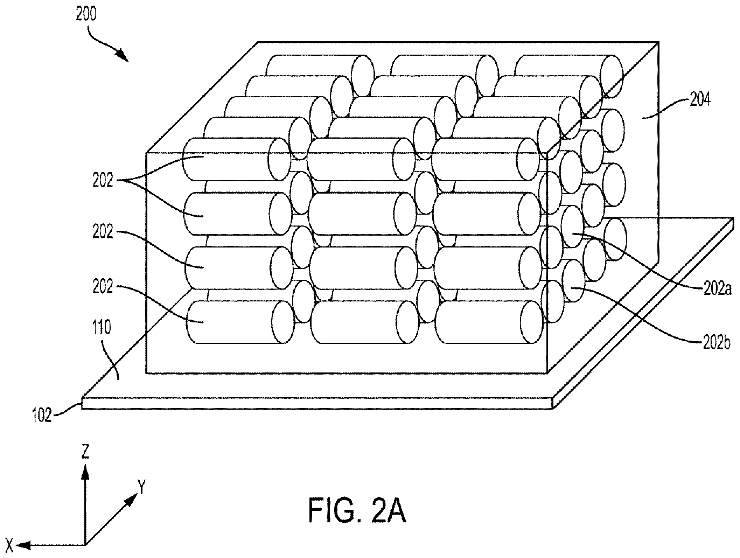

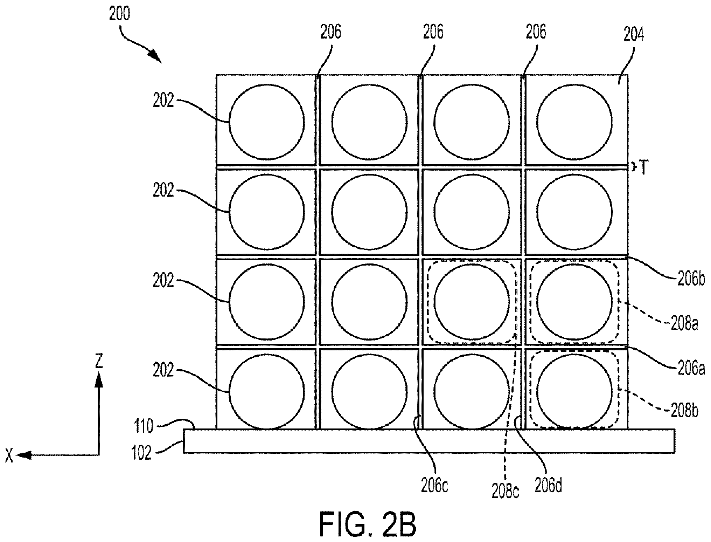

A variety of build structures may be formed using the method of the present disclosure. By way of illustration, FIG. 2A shows a perspective view of a build structure 200 (for clarity the boundary regions are not shown). FIG. 2B shows a side, cross-sectional view of the build structure 200. The build structure 200 includes a plurality of 3D objects (four of which are labeled 202) distributed throughout and embedded within a support matrix 204. In the illustrative embodiment, the 3D objects are identical, arranged in a three-dimensional, multi-layer, stacked array, and are fully surrounded and fully embedded such that they are encapsulated by the support matrix 204. However, this embodiment is not limiting. Through image data associated with the build structure 200 and accessible by a processor operably coupled to a controller of the 3D printing system, 3D objects having different dimensions, shapes, relative arrangements, and degrees of encapsulation may be formed.

Similarly, although the illustrative embodiment shows the build structure 200 in the form of a block, build structures having different dimensions and shapes may be formed. For embodiments in which the build structure 200 is in the form of a block characterized by a width, length, and height, in embodiments, the width, length, and height may be independently selected to be in the range from about 1 inch to about 30 inches, from about 5 inches to about 25 inches, or from about 10 inches to about 20 inches. For example, the build structure 200 may be characterized by a width of about 20 inches, a length of about 20 inches and a height of about 12 inches.

As shown in FIGs. 2A-2B, the build structure 200 includes 3D objects which are distributed vertically (i.e., in the z direction) relative to one another within the build structure 200 (e.g., 3D objects 202a and 202b). This arrangement is by contrast to conventional arrangements whereby 3D objects are distributed substantially within a single plane, e.g., a plane parallel to the underlying build plate 102.

As shown in FIG. 2B, the build structure 200 further includes a plurality of boundary regions (three of which are labeled 206) distributed throughout and embedded within the support matrix 204. The plurality of boundary regions is arranged so that adjacent embedded 3D objects are separated by a boundary region. For example, boundary region 206a separates embedded 3D object 208a from adjacent embedded 3D object 208b. The plurality of boundary regions delineates individual embedded 3D objects. For example, boundary regions 206a, 206b, 206c, and 206d delineate embedded 3D object 208c. The term "embedded 3D object" is meant to refer to a 3D object and at least a portion of the support matrix 204 which surrounds the 3D object. Although the illustrative embodiment shows an arrangement of the plurality of boundary regions as a three-dimensional grid formed by intersecting layers of boundary regions, this embodiment is not limiting. Image data associated with the build structure 200 may be used to form boundary regions having different dimensions, shapes, and arrangements. In addition, the term "grid" is not limited to sets of parallel layers of material which intersect at 90° angles to define square or rectangular shaped cells confining the embedded 3D objects. The orientation of the layers of material and the shapes of the defined cells may vary, depending upon the dimensions, shapes, etc. of the 3D objects.

In addition, although the illustrative embodiment shows a configuration of the plurality of boundary regions which completely separates adjacent embedded 3D objects, this embodiment is not limiting. For example, segmented rather than continuous boundary regions may be used. Such an embodiment may be illustrated by replacing the continuous lines of FIG. 2B (representing the plurality of boundary regions) with dotted or dashed lines. As further described below, the particular configuration of the plurality of boundary regions may be selected to facilitate removal of the plurality of boundary regions from the build structure 200 (e.g., by softening or melting the material of the boundary regions) to create voids or perforations in the build structure 200, thereby facilitating the separation of embedded 3D objects.

As described above, different dimensions and shapes of the plurality of boundary regions may be used in the formation of the build structure 200. However, as illustrated in FIG. 2B, the amount of material forming the plurality of boundary regions may be small relative to the amount of material forming the support matrix 204. The amount of material forming the plurality of boundary regions may be sufficiently small so as to soften or melt quickly during a subsequent separation step, but sufficiently large so as to minimize or prevent re-solidification during the subsequent separation step. The amount of material forming the plurality of boundary regions may be quantified by the percent by volume of the plurality of boundary regions in the build structure 200, based on the total volume of the plurality of boundary regions and the support matrix 204. In embodiments, the plurality of boundary regions is from about 5% to about 35% by volume, from about 10% to about 30% by volume, or from about 15% to about 25% by volume, based on the total volume of the plurality of boundary regions and the support matrix 204.

As shown in the illustrative embodiment, the amount of material forming the plurality of boundary regions may be quantified by a thickness T of the layers making up the plurality of boundary regions. As surface tension between the material of the boundary regions and the material of the support matrix 204 can prevent the material of the boundary regions from flowing through small gaps, the thickness T may be sufficiently large so as to create a channel for the softened/melted material to flow freely between the regions of the support matrix 204 during a subsequent separation step. In embodiments, the thickness T is at least about 2 mm, at least about 6 mm, or at least about 8 mm. In embodiments, the thickness $T$ is in the range of from about 2 mm to about 10 mm, from about 2 mm to about 8 mm, or from about 3 mm to about 7 mm.

The amount of material forming the support matrix 204 may be sufficient to protect the plurality of 3D objects from damage (e.g., burning or melting or distorting) during the subsequent separation step. The amount of material forming the support matrix 204 may be quantified by the percent by volume of the support matrix 204 in the build structure

**EP 3 281 772 A1**

200, based on the total volume of the plurality of boundary regions and the support matrix 204. In embodiments, the support matrix 204 is from about 95% to about 65% by volume, from about 90% to about 70% by volume, or from about 85% to about 75% by volume, based on the total volume of the plurality of boundary regions and the support matrix 204.

Various materials may be used to form the plurality of 3D objects, the support matrix and the plurality of boundary regions. In general, any material that is capable of being 3D printed may be used. One or multiple types of materials may be used to form the plurality of 3D objects (e.g., different 3D objects may be formed from different materials). The material(s) from which the plurality of 3D objects is composed may be referred to as the build material.

By way of illustration, a variety of curable build materials may be used which include one or more types of mono- or multi-functional monomers, one or more types of oligomers or pre-polymers, and one or more types of photoinitiators. Illustrative monomers include (meth)acrylate monomers such as isobornyl (meth)acrylate, diethylene glycol diacrylate, triethylene glycol diacrylate, tetraethylene glycol diacrylate, tris-2-hydroxyethylacrylate isocyanurate, 2-[[(butylamino)carbonyloxy] ethyl acrylate, and the like. Other illustrative monomers include acrylic monomers such as N-acryloylmorpholine. Illustrative oligomers or pre-polymers include urethane (meth)acrylates, epoxy acrylates, polycaprolactones, polyesters, and the like. Photoinitiators include 1-hydroxycyclohexyl phenyl ketone , 2,4,6 Trimethylbenzoyldiphenylphosphine oxide, and the like. Illustrative components for curable build materials may be found in U.S. Pat. No. 9,157,007, which is hereby incorporated by reference in its entirety. The particular selection of chemical components and their relative amounts determines the properties of the build material, including its dielectric loss tangent (DLT) coefficient, as further described below. Thermoplastic build materials may also be used, such as those based on acrylonitrile butadiene styrene (ABS).

Similarly, one or multiple types of materials may be used to form the support matrix and the plurality of boundary regions, respectively. The material(s) from which the support matrix is composed may be referred to as the support matrix material. The material(s) from which the plurality of boundary regions is formed may be referred to as the boundary region material.

By way of illustration, the support matrix material and the boundary region material may be formed from various combinations of fatty alcohols, ethoxylated fatty alcohols, rosin esters, and waxes. Illustrative fatty alcohols include stearyl alcohol, cetyl alcohol, and ceteareth-20. An illustrative ethoxylated fatty alcohol is polyethylene glycol lauryl ether. Illustrative rosin esters include glycerol ester of hydrogenated/disproportionate abietic acid and pentaerythritol ester of rosin. Illustrative waxes include paraffin waxes, microcrystalline waxes, polyethylene waxes, ester waxes, and fatty amide waxes. Stabilizers such as butylated hydroxytoluene may be included. Illustrative components for support matrix materials may be found in U.S. Pat. Nos. 7,176,253 and 8,460,451, each of which is hereby incorporated by reference in its entirety. Again, the particular selection of chemical components and their relative amounts determines the properties of the support matrix material and the boundary region material.

Each of the build material, the support matrix material and the boundary region material is different (i.e., has different chemical compositions) from one another. However, in some embodiments, the materials may share some of the same chemical components. By way of illustration, the support matrix material and the boundary region material may include the same type of wax, but the boundary region material may additionally include additives in order to tune the properties of the boundary region material, as further described below.

The plurality of 3D objects, the support matrix, and the plurality of boundary regions may each be characterized by a respective dielectric loss tangent (DLT) coefficient, tan $\delta$. The DLT coefficient of a material (or blend of materials) is proportional to the power dissipated by that material in an oscillating electric field (e.g., that generated by microwave radiation) having a selected frequency. The power dissipated appears as heat generated throughout the volume of the material. Generally, the greater the DLT coefficient, the faster the heating of the material. The DLT coefficient of a material may be measured using standard cavity perturbation methods, e.g., via the method described in the Example, below.

The materials used to form the plurality of 3D objects, the support matrix and the plurality of boundary regions may be selected in order to achieve desired DLT coefficients over a selected temperature range (or at a selected temperature) and over a selected frequency range (or at a selected frequency). The selected temperature range may be one which encompasses the temperature achieved in a subsequent separation step (e.g., to remove the plurality of boundary regions) or a subsequent post-processing step (e.g., to remove the support matrix) or both. In embodiments, the selected temperature range is from about 10 °C to about 80 °C, from about 20 °C to about 80 °C, from about 40 °C to about 80 °C, or from about 55 °C to about 75 °C. The selected temperature may be the temperature achieved in the subsequent separation step/post-processing step. In embodiments, the selected temperature is about 20 °C, about 30 °C, about 40 °C, about 50 °C, or about 60 °C. The selected frequency range may be one which encompasses the frequency of microwave radiation used in the subsequent separation step. In embodiments, the selected frequency range is from about 900 MHz to about 2600 MHz, from about 1000 MHz to about 2600 MHz, or from about 1500 MHz to about 2600 MHz. The selected frequency may be the frequency of the microwave radiation used in the subsequent separate step. In embodiments, the selected frequency is 915 MHz, 2450 MHz, or 2500 MHz.

In embodiments, the materials are selected such that the DLT coefficient of the plurality of boundary regions is greater than both the DLT coefficient of the support matrix and the DLT coefficient of the plurality of 3D objects over the selected temperature range/temperature and the selected frequency range/frequency. In some such embodiments, the materials are further selected such that the DLT coefficient of the support matrix is greater than the DLT coefficient of the plurality of 3D objects over the selected temperature range/temperature and the selected frequency range/frequency.

In embodiments, the materials are selected such that the DLT coefficient of the plurality of boundary regions is at least 2 times, at least 3 times, at least 4 times, at least 5 times, or at least 6 times greater than the DLT coefficient of the support matrix, the DLT coefficient of the plurality of 3D objects, or both, over the selected temperature range/temperature and the selected frequency range/frequency. This includes embodiments in which the materials are selected such that the DLT coefficient of the plurality of boundary regions is about 2 to about 10 times greater, about 3 to about 7 times greater, or about 4 to about 6 times greater than the DLT coefficient of the support matrix, the DLT coefficient of the plurality of 3D objects, or both, over the selected temperature range/temperature and the selected frequency range/frequency.

In embodiments, the DLT coefficient of the plurality of boundary regions is at least 0.2, at least 0.3, at least 0.4, at least 0.6, or in the range of from about 0.2 to about 0.7 over the selected temperature range/temperature and the selected frequency range/frequency. In embodiments, the DLT coefficient of the support matrix is at least 0.06, at least 0.08, at least 0.09, at least 0.1 or in the range of from about 0.06 to about 0.1 over the selected temperature range/temperature and the selected frequency range/frequency. In embodiments, the DLT coefficient of the plurality of 3D objects is no greater than 0.1, no greater than 0.09, no greater than 0.08, no greater than 0.06 or in the range of from about 0.05 to about 0.1 over the selected temperature range/temperature and the selected frequency range/frequency.

In determining ratios of DLT coefficients (e.g., ratio of the DLT coefficient of the plurality of boundary region to the DLT coefficient of the plurality of 3D objects), it is noted that if the plurality of 3D objects includes 3D objects formed of different types of build materials having different DLT coefficients, the DLT coefficient for the plurality of 3D objects may be taken as the DLT coefficient corresponding to the 3D object having the largest DLT coefficient. Similarly, if the plurality of boundary regions includes boundary regions formed of different types of boundary region materials having different DLT coefficients, the DLT coefficient for the plurality of boundary regions may be taken as the DLT coefficient corresponding to the boundary region having the smallest DLT coefficient.

As described above, the disclosed DLT coefficients may be obtained through selection of the materials (chemical components and their relative amounts) forming the various portions of the build structure (the plurality of 3D objects, the support matrix, the plurality of boundary regions) as described above. Additives may be included in the materials, particularly in the boundary region material, in various amounts to tune the DLT coefficient of the plurality of boundary regions. Such additives include nanoparticles composed of an element/compound having a relatively high DLT coefficient over the selected temperature range/temperature and selected frequency range/frequency. Illustrative elements/compounds include ferromagnetic materials such as iron (or alloys thereof), silicon carbide, and graphite. Nanoparticles having various sizes and shapes may be used. However, the nanoparticles have one or more dimensions in the nanometer range, i.e., less than about 100 nm. Each of the dimensions may be less than about 100 nm, including in the range of from about 1 nm to about 50 nm, from about 2 nm to about 25 nm, or from about 5 nm to about 10 nm. Such additives may be pre-blended with other chemical components and dispensed together via a 3D printer (e.g., via a nozzle of a print head). Alternatively, such additives may be separately dispensed via the 3D printer or via another interfaced device of the 3D printing system, e.g., onto a previously printed layer or region thereof.

Selection of the components of the build material, the support matrix material and the boundary region material may also be driven by a desired melting temperature, freezing temperature and/or viscosity of the material(s) over a selected temperature range (e.g., the temperature at which the components are to be dispensed).

After formation of a build structure including a plurality of 3D objects (such as build structure 200) individual 3D objects may be separated from the build structure. Thus, the method of the present disclosure may further comprise a separation step. In embodiments, the separation step includes exposing the build structure to microwave radiation. Although the entire build structure may be exposed to the microwave radiation, the heating of the build structure may be non-uniform due, at least in part, to the use of different build, support matrix, and/or boundary region materials having different DLT coefficients. By way of illustration, in embodiments in which components of the materials are selected such that the DLT coefficient of the plurality of boundary regions is greater than both the DLT coefficient of the support matrix and the DLT coefficient of the plurality of 3D objects, the exposure to microwave radiation can result in the plurality of boundary regions heating up and softening/melting more quickly than the support matrix and the plurality of 3D objects. As the plurality of boundary regions soften/melt, the boundary region material may flow off the build structure, creating voids or perforations in the build structure, thereby facilitating the release of individual embedded 3D objects. In embodiments, this release/separation may be accomplished without the use of any mechanical force (i.e., using only gravity).

The conditions under which the exposure to microwave radiation may vary, but are sufficient to soften/melt at least some of the plurality of boundary regions in the build structure so as to achieve separation of at least some of the embedded 3D objects from the build structure. These conditions may include a selected period of time. The period of time may be in the range of from about 10 seconds to about 300 seconds. The conditions may also include a selected power and frequency of the microwave radiation. Illustrative powers are in the range of from about 200 Watts to about 1500 Watts. Illustrative frequencies are in the range of from about 900 MHz to about 2600 MHz.

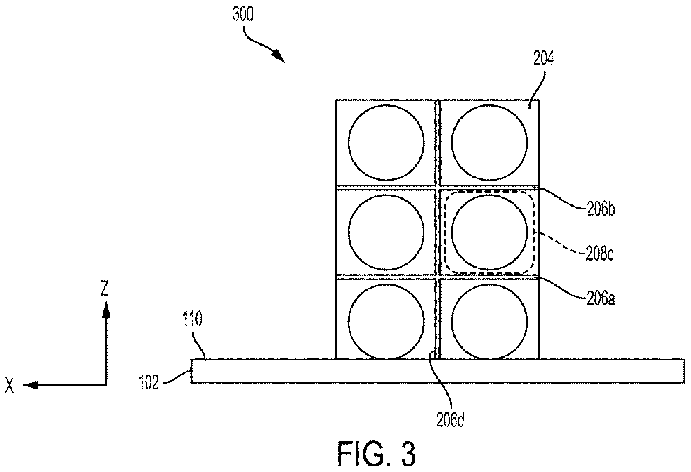

FIG. 3 illustrates a result of exposing build structure 200 to microwave radiation. Outer layers of embedded 3D objects have been separated from build structure 200, leaving an inner portion 300 of the remaining embedded 3D objects separated by portions of boundary regions (including portions of boundary regions 206a, 206b and 206d). The inner portion 300 may be further exposed to microwave radiation as described above in order to separate additional embedded 3D objects from the inner portion 300. The exposure steps may be repeated as necessary in order to separate each of the embedded 3D objects.

Once separated, embedded 3D objects may still be surrounded by at least some of the support matrix. Thus, the embedded 3D objects may be subjected to additional post-processing steps in order to remove such support matrix. Because the embedded 3D objects have been separated from one another, individual embedded 3D objects may be post-processed individually with whichever additional post-processing technique is ideal in view of the particular characteristics of the individual 3D objects (e.g., dimensions, shapes, surfaces, etc.). Such additional post-processing steps for support matrix removal include the use of a turbulent water bath, pressure spray, application of heat via a convection oven, heated fluid bath, microwave oven, etc.

As noted above, the methods of the present disclosure may be carried out by a variety of 3D printers and 3D printing systems. With reference back to FIG. 1, an illustrative 3D printing system 100 is shown. The 3D printing system 100 includes a 3D printer including a build plate 102 and a print head 104. The print head 104 includes a plurality of nozzles (one of which is labeled 106) configured to eject drops of material(s) (one of which is labeled 108) towards a surface 110 of the build plate 102 in order to form a 3D object 103 thereon. Different nozzles of the plurality of nozzles may be used to eject material to form the 3D object 103 as well as material to form a support matrix to stabilize and support the 3D object 103 during its formation. The 3D printing system 100 further includes an actuator 112 configured to achieve relative translation of the build plate 102 and the print head 104 in three dimensions. The x and z dimensions are labeled in FIG. 1; the *y* dimension is perpendicular to the plane of the page. The actuator 112 (or a different actuator) may also be operably coupled to a transport 114 configured to transport the build plate 102 (and any 3D object thereon) to other devices of the 3D printing system 100, e.g., a 3D object separation device, as described further below. In embodiments, the 3D printer of the 3D printing system 100 is configured to form a build structure including a plurality of 3D objects in a single production run or print job (e.g., the build structure 200 of FIGs. 2A-2B).

The 3D printing system 100 also includes a controller 116 configured to control the operation of the devices (or components thereof) of the 3D printing system 100. For example, the controller 116 may be operably coupled to the actuator 112 and the print head 104 of the 3D printer. The controller 116 may include an input interface, an output interface, a communication interface, a computer-readable medium, a processor, and a control application. The input interface may provide an interface for receiving information from a user for processing by the controller 116 and may further provide an interface for receiving information from the devices of the 3D printing system 100, e.g., the 3D printer. The output interface may provide an interface for outputting information for review by the user and may further provide an interface for outputting information to the devices of the 3D printing system 100. The communication interface may provide an interface for receiving and transmitting data between devices using various protocols, transmission technologies and media. Data and messages may be transferred between any input or output device and the controller 116 using the communication interface. Thus, the communication interface provides an alternative interface to either or both of the input and output interfaces.

The controller 116 of the 3D printing system 100 may also be configured to send/receive information identifying individual 3D objects within a build structure as well as their arrangement, an indicator of additional steps to be performed on the build structure or individual embedded 3D objects, an indicator of where the build plate 102 should be positioned within the 3D printing system 100, etc.

The controller 116 may be linked to one or more interfaced devices such that the controller 116 may send and receive information to/from such interfaced devices. The controller 116 and such interfaced devices may be connected directly or through a network, which may be any type of wired or wireless network.

The computer-readable medium of the controller 116 is an electronic holding place or storage for information so that the information can be accessed by the processor of the controller 116. Image data associated with a build structure to be formed, e.g., a graphic representation of the build structure rendered into layers, may be stored in such computer-readable medium. The processor executes instructions which may be carried out by a special purpose computer, logic circuits, or hardware circuits. Thus, the processor may be implemented in hardware, firmware, software or combinations thereof. The term "execution" is the process of running an application or the carrying out of the operation called for by an instruction. The instructions may be written using one or more programming languages, scripting languages, assembly languages, etc. The processor executes an instruction, meaning that it performs/controls the operations called for by that instruction. The processor operably couples with the input interface, the output interface, the communication interface, and with the computer-readable medium to receive, to send, and to process information.

The control application of the controller 116 may perform operations associated with controlling the various devices of the 3D printing system 100. e.g., so that the devices of the 3D printing system execute one or more of the steps of the method of the present disclosure. Some or all of the operations may be controlled by instructions embodied in the control application. The operations may be implemented using hardware, firmware, software, or combinations thereof. By way of illustration, control application may be implemented in software (comprised of computer-readable and/or computer-executable instructions) stored in the computer-readable medium and accessible by the processor for execution of the instructions that embody the operations of control application. The control application may be written using one or more programming languages, assembly languages, scripting languages, etc.

By way of illustration, the controller 116 may be configured to operate the 3D printer with reference to stored or received image data corresponding to a desired build structure. To form a layer of the build structure, the controller 116 can operate the 3D printer to sweep the print head 104 in one direction (e.g., the x direction) while ejecting material(s) towards the build plate 102 as dictated by the image data. The controller 116 can shift the print head 104 in the *y* direction between multiple sweeps. The controller 116 can move the print head 104 in the vertical direction (*z*) prior to printing the next layer of the build structure.

As shown in FIG. 1, the 3D printing system 100 may further include a 3D object separating device for separating embedded 3D objects from a build structure (e.g., the build structure 200). The 3D object separating device may include a source of microwave radiation 118. The 3D object separating device may include a housing 120 configured to contain the source 118 and the build structure (optionally, with the build plate 102). The transport 114 may be used to move the build structure into the housing 120. Within the housing 120, the build structure may be exposed to microwave radiation for a selected period of time or until a selected temperature is reached, as described above. Any type of timer or temperature sensor 122 may be used to monitor the time/temperature during the exposure to microwave radiation. The 3D object separation device may further include a pump 124 and drain 126, which may be heated, to facilitate the removal of boundary regions from the build structure as the boundary region material softens/melts. Alternatively, the 3D object separation device may further include a sump to collect catch the boundary region material as it softens/melts. The sump may include a metal mesh cover, e.g., a metal plate with holes (e.g., 3 mm in diameter). Such a metal mesh cover can reflect the microwave radiation back into the housing 120. The sump may include drain holes to allow the melted boundary region material to drip into a container below the sump. This prevents the melted boundary region material from continuing to absorb the microwave radiation and lowering the electromagnetic field density in the housing 120.

The 3D printing system 100 may further include 3D object post-processing device(s) for removal of a support matrix from the separated embedded 3D objects. The embedded 3D objects may be moved (e.g., via the transport 114) together or individually to such additional 3D object post-processing device(s). Illustrative 3D object post-processing devices include turbulent water baths, pressure sprayers, convection ovens, etc.

The 3D printing system 100 shown in FIG. 1 is merely illustrative. Additional components may be included, e.g., components typically included in 3D printers, multiple actuators, multiple controllers, multiple processors, 3D object post-processing devices, etc. Moreover, the functionality of the 3D printing system 100 may be integrated into a single device or may be distributed across one or more devices that are connected directly or through a network that may be wired or wireless. Moreover, the 3D printing system 100 may include fewer components. By way of illustration, the 3D printing system 100 may include the 3D printer while the 3D separation device (and any 3D object post-processing devices) may be a separate, unconnected device.

## EXAMPLE

The following Example is being submitted to illustrate various embodiments of the present disclosure. The Example is intended to be illustrative only and is not intended to limit the scope of the present disclosure. Also, parts and percentages are by weight unless otherwise indicated. As used throughout this specification, "room temperature" refers to a temperature of from about 20° C. to about 25° C.

This example describes dielectric measurements performed on three materials, "Build Material A," "Build Material B," and "Support Matrix Material." Build Material A was VisiJet® CR-CL, commercially available from 3D Systems, Inc. Build Material B was VisiJet® CR-WT, commercially available from 3D Systems, Inc. Support Matrix Material was VisiJet® S500, commercially available from 3D Systems, Inc.

A standard cavity perturbation method was used for the dielectric measurements. Each material was formed into a 3 mm diameter by 25 mm long rod. Samples were measured at temperature increments of 5 °C, starting from room temperature up to 100 °C. First, samples were heated in a conventional oven to the target temperature for 5 minutes to equilibrate. Next, the samples were dropped into a cylindrical $TM_{0n0}$ mode cavity resonator having a constant electric/magnetic (E/H) field at 2466 MHz. The samples perturb the field's resonance frequency and quality factor (as compared to the empty cavity), resulting in resonance frequency shifts and quality factor shifts, which were measured using a network analyzer. A commercially available cavity resonator/network analyzer was used (E4991B-002 Material Measurement Firmware with dielectric material test fixture 16453A available from Keysight Technologies).

The real part of the complex permittivity of the sample (i.e., $\varepsilon'$) was calculated from the resonance frequency shifts per Equation 1 and the imaginary part of the complex permittivity of the sample (i.e., $\varepsilon''$) was calculated from the quality factor shifts per Equation 2.

$$\varepsilon' = 1 + A^{-1} \frac{V_c \Delta f}{V_s f_0} \qquad \text{Equation 1}$$

$$\varepsilon'' = B^{-1} \frac{V_c}{V_s} \left( \frac{1}{Q_1} - \frac{1}{Q_0} \right) \qquad \text{Equation 2}$$

where $f_0$ is the resonance frequency and $Q_0$ is the Q factor for the empty cavity resonator; $f$ and $Q_1$ are the resonance frequency and Q factor for the cavity resonator including the sample, respectively; $V_c$ and $V_s$ are the volumes for the cavity resonator and sample, respectively; and $\Delta f = f_0 - f$. Coefficients A and B, which depend upon the shape, size and location of the sample in the cavity as well as the cavity configuration and operating mode, were determined empirically through calibration according to the instrument's operating manual.

Next, the dielectric loss tangent (DLT) coefficient, tan $\delta$, was calculated using Equation 3.

$$\tan \delta = \frac{\varepsilon''}{\varepsilon'} \qquad \text{Equation 3}$$

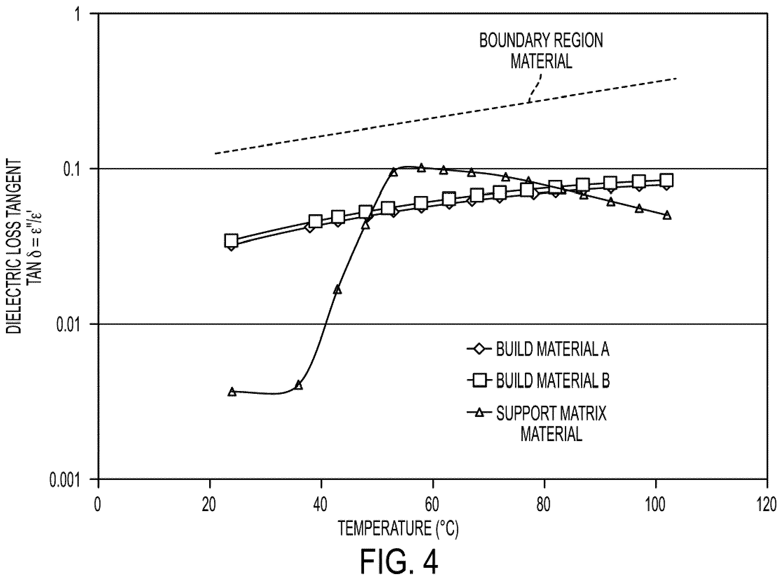

FIG. 4 shows a plot of the calculated DLT coefficients for the three tested samples as a function of temperature (the frequency was 2466 MHz). Also shown is the DLT coefficient of a boundary region material which may be used to form a build structure as described in the present disclosure.

The half-power depth, $D_{halfpower}$, was also calculated using Equation 4.

$$D_{halfpower} = \frac{c(\ln 2)}{2\omega\varepsilon_0} \left( \frac{2}{\left(\sqrt{1+(\tan\delta)^2}-1\right)\varepsilon'} \right)^{1/2} \qquad \text{Equation 4}$$

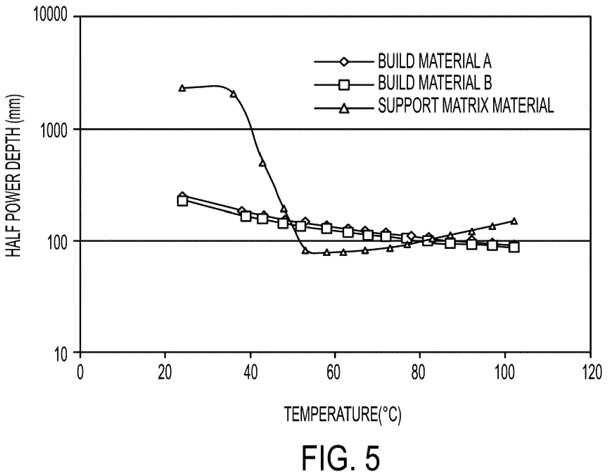

where c is the speed of light ($3\times10^8$ m/s), $\omega$ is the angular frequency ($2\pi f$), and $\varepsilon_0$ is the permittivity of free space ($8.854 \times 10^{-12}$ F/m). Half-power depth relates the distance at which 50% of an incident plane-wave of microwave radiation is absorbed into the material. Large values of $D_{halfpower}$ (e.g., greater than about 10 meters) indicate a highly transmissive (transparent) material. Values on par with the sample size (thickness) (e.g., from about 0.01 meters to about 10 meters) indicate good absorption. Very small values (e.g., less than about 0.01 meter) indicate a highly reflective material. FIG. 5 shows a plot of the calculated $D_{halfpower}$ values for the three tested samples as a function of temperature (the frequency was 2466 MHz).

It will be appreciated that variants of the above-disclosed and other features and functions or alternatives thereof, may be combined into many other different systems or applications. Various presently unforeseen or unanticipated alternatives, modifications, variations or improvements therein may be subsequently made by those skilled in the art, which are also intended to be encompassed by the following claims.

## Claims

1. A method for forming a plurality of three-dimensional (3D) objects, the method comprising:

(a) dispensing a first material toward a build plate via a 3D printing system to form a plurality of 3D objects, the plurality of 3D objects **characterized by** a first dielectric loss tangent (DLT) coefficient over a selected temperature range and a selected frequency range,

(b) dispensing a second material toward the build plate via the 3D printing system to form a support matrix surrounding the plurality of 3D objects such that the plurality of 3D objects is embedded within the support matrix, the support matrix **characterized by** a second DLT coefficient over the selected temperature range and the selected frequency range, and

(c) dispensing a third material toward the build plate via the 3D printing system to form one or more boundary regions embedded within the support matrix such that adjacent embedded 3D objects are separated by the one or more boundary regions, the one or more boundary regions **characterized by** a third DLT coefficient over the selected temperature range and the selected frequency range,

wherein the plurality of 3D objects, the support matrix and the one or more boundary regions provide a build structure corresponding to image data accessible by the 3D printing system,
wherein the third DLT coefficient is greater than both the second DLT coefficient and the first DLT coefficient over the selected temperature range and the selected frequency range.

2. The method of claim 1, wherein 3D objects of the plurality of 3D objects are vertically stacked within the support matrix.

3. The method of claim 1, wherein dispensing the third material comprises forming a plurality of boundary regions embedded within the support matrix such that adjacent embedded 3D objects are separated by a boundary region of the plurality of boundary regions and the plurality of boundary regions delineates embedded 3D objects.

4. The method of claim 3, wherein the boundary regions of the plurality of boundary regions are each in the form of a layer.

5. The method of claim 3, wherein the plurality of boundary regions are arranged in a three-dimensional grid formed by intersecting layers of boundary regions.

6. The method of claim 4, wherein each layer of boundary region is **characterized by** a thickness in the range of from about 2 mm to about 10 mm.

7. A 3D printing system for forming a plurality of 3D objects, the system comprising:

(a) a 3D printer comprising a print head and a build plate,
(b) a controller operably coupled to the 3D printer, the controller comprising a processor and a non-transitory computer-readable medium operably coupled to the processor, the computer-readable medium comprising instructions that, when executed by the processor, perform operations which cause the 3D printing system to:

(i) dispense a first material toward a build plate to form a plurality of 3D objects, the plurality of 3D objects **characterized by** a first DLT coefficient over a selected temperature range and a selected frequency range,
(ii) dispense a second material toward the build plate to form a support matrix surrounding the plurality of 3D objects such that the plurality of 3D objects is embedded within the support matrix, the support matrix **characterized by** a second DLT coefficient over the selected temperature range and the selected frequency range, and
(iii) dispense a third material toward the build plate to form one or more boundary regions embedded within the support matrix such that adjacent embedded 3D objects are separated by the one or more boundary regions, the one or more boundary regions **characterized by** a third DLT coefficient over the selected temperature range and the selected frequency range,

wherein the plurality of 3D objects, the support matrix and the one or more boundary regions provide a build structure corresponding to image data accessible by the 3D printing system,
wherein the third DLT coefficient is greater than both the second DLT coefficient and the first DLT coefficient over the selected temperature range and the selected frequency range.

8. A 3D-printed build structure comprising:

(a) a plurality of 3D objects, the plurality of 3D objects **characterized by** a first DLT coefficient over a selected temperature range and a selected frequency range,
(b) a support matrix surrounding the plurality of 3D objects such that the plurality of 3D objects is embedded within the support matrix, the support matrix **characterized by** a second DLT coefficient over the selected temperature range, and
(c) one or more boundary regions embedded within the support matrix such that adjacent embedded 3D objects are separated by the one or more boundary regions, the one or more boundary regions **characterized by** a third DLT coefficient over the selected temperature range and the selected frequency range,

wherein the third DLT coefficient is greater than both the second DLT coefficient and the first DLT coefficient over the selected temperature range and the selected frequency range.

9. A method for forming at least one three-dimensional (3D) object, the method comprising:

(a) dispensing via a 3D printing system a first material onto a build plate to form at least one 3D object, the at least one 3D object **characterized by** a first dielectric loss tangent (DLT) coefficient over a predetermined temperature range and a predetermined frequency range,
(b) dispensing via the 3D printing system a second material onto the plate, to form a support matrix surrounding the at least one 3D object such that the at least one 3D object is embedded within the support matrix, the support matrix **characterized by** a second DLT coefficient over the predetermined temperature and frequency ranges, and
(c) dispensing via the 3D printing system a third material onto the plate, to form one or more boundary regions embedded within the support matrix such that at least one other 3D object adjacent the embedded at least one 3D object is separated by the one or more boundary regions, the one or more boundary regions **characterized by** a third DLT coefficient over the predetermined temperature and frequency ranges,

wherein the embedded at least one 3D object and the at least one other 3D object, the support matrix and the one or more boundary regions provide a predetermined build structure corresponding to image data accessible by the processor of the 3D printing system, and
wherein the third DLT coefficient has a value that is greater over the predetermined temperature and frequency ranges than a value for either the first or second DLT coefficients.

10. A 3D printing system for forming at least one 3D object, the system comprising:

(a) a 3D printer comprising a print head and a build plate,
(b) a controller operably coupled to the 3D printer, the controller comprising a processor and a non-transitory computer-readable medium operably coupled to the processor, the computer-readable medium including processor-executable instructions that, when executed by the processor, perform operations which cause the 3D printing system to:

(i) dispense a first material onto a build plate to form at least one 3D object, the at least one 3D object **characterized by** a first DLT coefficient over a predetermined temperature range and a predetermined frequency range,
(ii) dispense a second material onto the build plate to form a support matrix surrounding the at least one 3D object such that the at least one 3D object is embedded within the support matrix, the support matrix **characterized by** a second DLT coefficient over the predetermined temperature and frequency ranges, and
(iii) dispense a third material onto the build plate to form one or more boundary regions embedded within the support matrix such that at least one other 3D object adjacent the embedded at least one 3D object is separated by the one or more boundary regions, the one or more boundary regions **characterized by** a third DLT coefficient over the predetermined temperature and frequency ranges,

wherein the embedded at least one 3D object and the adjacent at least one other 3D object, the support matrix and the one or more boundary regions provide a predetermined build structure corresponding to image data accessible by the processor of the 3D printing system, and
wherein the third DLT coefficient has a value greater over the predetermined temperature and frequency ranges than a value for either the first or second DLT coefficients.

FIG. 1

200

204

202

202

202

202

202a

202b

110

102

Z

Y

X

FIG. 2A

FIG. 2B

FIG. 3

FIG. 4

FIG. 5

Europäisches
Patentamt

European
Patent Office

Office européen
des brevets

## EUROPEAN SEARCH REPORT

Application Number

EP 17 18 5615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/010108 A1 (NUVOTRONICS LLC [US]; SHERRER DAVID W [US]; CARDWELL DARA L [US]) 17 January 2013 (2013-01-17) | 10 | INV. B29C64/40 B29C64/106 |
| A | * claims 14-23,71-86 * | 1-9 | B29C64/171 B29C64/182 |
| X | WO 2015/069619 A1 (HARVARD COLLEGE [US]) 14 May 2015 (2015-05-14) | 7,10 | |
| A | * figures 1B,2B,4,5A * <br> * paragraph [0063] - paragraph [0069] * <br> * claim 1 * | 1-6,8,9 | |
| A | WO 2015/102938 A1 (3M INNOVATIVE PROPERTIES CO [US]) 9 July 2015 (2015-07-09) * claims 1,13 * | 1-10 | |

TECHNICAL FIELDS
SEARCHED     (IPC)

B29C

The present search report has been drawn up for all claims

| Place of search | Date of completion of the search | Examiner |
|---|---|---|
| The Hague | 4 December 2017 | Whelan, Natalie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 18 5615

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2017

| Patent document cited in search report | | Publication date | Patent family member(s) | | Publication date |
|---|---|---|---|---|---|
| WO 2013010108 | A1 | 17-01-2013 | EP | 2731783 A1 | 21-05-2014 |
| | | | JP | 2014527474 A | 16-10-2014 |
| | | | KR | 20140038483 A | 28-03-2014 |
| | | | US | 2014231266 A1 | 21-08-2014 |
| | | | WO | 2013010108 A1 | 17-01-2013 |
| WO 2015069619 | A1 | 14-05-2015 | AU | 2014346959 A1 | 26-05-2016 |
| | | | CA | 2929302 A1 | 14-05-2015 |
| | | | CN | 106163581 A | 23-11-2016 |
| | | | EP | 3065791 A1 | 14-09-2016 |
| | | | JP | 2016540502 A | 28-12-2016 |
| | | | KR | 20160090828 A | 01-08-2016 |
| | | | US | 2016287756 A1 | 06-10-2016 |
| | | | WO | 2015069619 A1 | 14-05-2015 |
| WO 2015102938 | A1 | 09-07-2015 | CN | 105873744 A | 17-08-2016 |
| | | | EP | 3089861 A1 | 09-11-2016 |
| | | | US | 2016322703 A1 | 03-11-2016 |
| | | | WO | 2015102938 A1 | 09-07-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9157007 B
- US 7176253 B

- US 8460451 B

**Non-patent literature cited in the description**

- **GEORGE ODIAN.** Principles of Polymerization. John Wiley & Sons, Inc, 1981